(19) Europäisches Patentamt

European Patent Office

Office européen des brevets

(11) **EP 0 543 917 B1**

(12) **EUROPEAN PATENT SPECIFICATION**

(45) Date of publication and mention
of the grant of the patent:
**03.12.1997 Bulletin 1997/49**

(21) Application number: **91915694.3**

(22) Date of filing: **12.08.1991**

(51) Int Cl.$^6$: **G06T 3/20**

(86) International application number:
**PCT/SE91/00530**

(87) International publication number:
**WO 92/03800 (05.03.1992 Gazette 1992/06)**

(54) **Method of interpolating the value of a pixel moved a subpixel distance**

Verfahren zur Interpolation eines um eine Unterpixel-Entfernung bewegten Bildpunktwertes

Procédé d'interpolation de la valeur d'un pixel deplacé d'une distance inférieure à celle de deux pixels adjacents

(84) Designated Contracting States:
**BE CH DE FR GB LI NL**

(30) Priority: **15.08.1990 SE 9002645**

(43) Date of publication of application:
**02.06.1993 Bulletin 1993/22**

(73) Proprietor: **TELIA AB**
**123 86 Farsta (SE)**

(72) Inventor: **BRUSEWITZ, Harald**
**S-123 86 Farsta (SE)**

(74) Representative: **Karlsson, Berne**
**Telia Research AB,**
**Koncernpatent**
**136 80 Haninge (SE)**

(56) References cited:
**EP-A- 0 280 316**

- **Jae S. Lim, Two-Dimensional Signal and Image Processing, Prentice-Hall Intl., Inc., 1990, Englewood Cliffs, N.J., USA, pp. 495-500 and 512-515.**

**Description**

FIELD OF THE INVENTION

The present invention relates to a method of moving a pixel a subpixel distance. Subpixel distance refers to a distance shorter than the distance between two adjacent pixels (pixel = picture element). The invention is intended to be applied in the picture coding methods for determining the value of a pixel located between the fixed pixels on the screen. This situation may occur in moving pictures where the pixels are moved arbitrary distances and thus, may end up between defined positions. The situation may also occur in conversion between different picture formats, so-called standards conversion.

STATE OF THE ART

According to the prior art usually 2x2 filters with so-called bilinear interpolation are used. The drawback with this technique is that it provides blurry pictures, especially in positions between two pixels. The reason is that the 2x2 filter has strong low-pass characteristics. This drawback is overcome to a great extent with the invention utilizing 3x3-filters or greater.

4x4 filters are also previously known, however, not with functions for calculating coefficients of arbitrary positions but only for half pixel distances. However, the present invention provides a method for arbitrary pixel distances.

From EP-A-0 280 316 is known a video image transforming method and apparatus employing image memories for geometrical transformation of an input image. In the transformation, interpolation data is used. The document teaches the skilled person to use other than first order interpolation, such as a curve of secondary degree, and weighting coefficients based on distance information.

The document J.S. Lim: Two-dimensional signal and image processing, Prentice-Hall, Englewood Cliffs, N.J., USA, 1990, pp. 495-500 and 512-515 (chapter 8) discloses "polynomial interpolation" based on 2x2, 3x3 or 5x5 pixels, where the interpolated value $f_c$ is a weighted sum of coefficients $S_i(x,y)$, where $[x,y]$ is a fractional displacement vector from a raster grid point and where the weighting terms $Phi_i$ also depend upon the displacement.

SUMMARY OF THE INVENTION

Thus, the present invention provides a method of moving a pixel a subpixel distance, wherein the value of the pixel is calculated using a known motion vector and values of pixels located in the vicinity of the corresponding pixel in the previous picture.

The invention is set forth in detail in the accompanying claims.

The invention will now be described in detail referring to the enclosed drawings.

BRIEF DESCRIPTION OF THE DRAWINGS

Figure 1. is a diagram illustrating a 3x3 filter in accordance with the present invention.
Figure 2. is a diagram illustrating a 4x4 filter in accordance with the present invention.

DETAILED DESCRIPTION OF PREFERRED EMBODIMENTS

The purpose of the present invention is to assign a value to a pixel which is to be calculated from the previous picture. It is assumed that a vector indicating the position in the old picture corresponding to the actual pixel is available. This situation occurs for instance in picture coding with prediction and standards conversion between different picture formats.

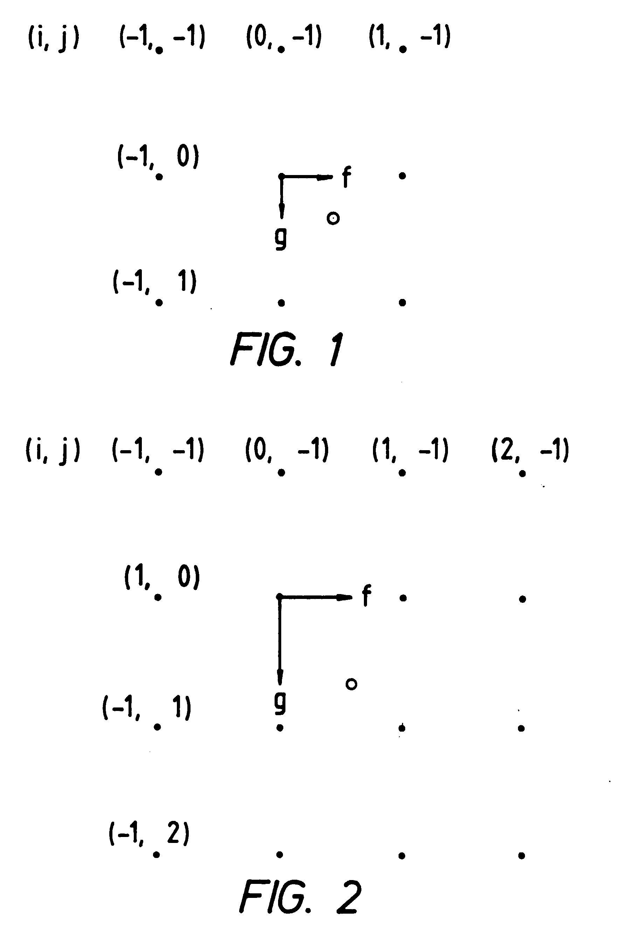

In figure 1, the positions of nine pixels in the previous picture are shown as dots and the pixel of which the value is to be calculated, is marked with a circle. Thus, in the new picture the circle corresponds to a pixel $q(n,k)$ in a fixed barpattern, similar to the nine dots shown in the figure for the previous picture. The motion vector (not shown) may be of arbitrary length. In calculating the new pixel value the integer parts of the motion vector are not used but only the fractional parts from the centre pixel (coordinates 0,0 in figure 1), the fractional parts in the figure being denoted by f and g for respective directions. For both f and g, $-1/2 < f \le 1/2$ and $-1/2 < g \le 1/2$. In accordance with the invention the new pixel value q is calculated as

$$q(n,k) = \sum_{i=-1}^{1} \sum_{j=-1}^{1} a_i r_j p(n+x+i, k+y+j)$$

where

i and j denote pixel coordinates in the previous picture which are used for the interpolation,
$a_i$ and $r_j$ are the filter coefficients,
n, k are the integer coordinates of the pixel q in the new picture,
x+f, y+g is the motion vector, x and y being the integer parts and f and g being the fractional parts, respectively, and
p is a pixel value in the previous picture.

Thus, referring to figure 1, the pixel value of the pixel at the left top should be multiplied with $a_{-1}$ and $r_{-1}$ et cetera.

The problem is separable horizontally and vertically, meaning that the coefficient $a_i r_j$ is a product of two coefficients $a_i$ and $r_j$. The following coefficients for a 3x3-filter have been found:

$$a_{-1} = \frac{-2f + 3f^2 - |f^3|}{4}$$

$$a_o = \frac{2 - 3f^2 + |f^3|}{2}$$

$$a_1 = \frac{2f + 3f^2 - |f^3|}{4}$$

and $r_j$ are identical functions of g.

In figure 2 the corresponding situation of a 4x4 filter is illustrated. For f and g, $0 \leq f < 1$ and $0 \leq g < 1$. For a 4x4 filter in accordance with the invention the following coefficients have been obtained:

$$a_{-1} = \frac{-7f + 12f^2 - 5f^3}{15}$$

$$a_o = \frac{15 - 3f - 27f^2 + 15f^3}{15}$$

$$a_1 = \frac{12f + 18f^2 - 15f^3}{15}$$

$$a_2 = \frac{-2f - 3f^2 + 5f^3}{15}$$

and $r_j$ are identical functions of g.

The greater the filter is chosen, the more information is obtained from the previous picture. In orders greater than four, however, the difference is hardly perceptible to the eye with the present screen technology.

The functions used to calculate the coefficients are chosen in a suitable way. The condition is that $\Sigma a_i = 1$ and $\Sigma r_j = 1$. It should be possible to find other functions as well, preferrably polynomials, using iteration, which would work acceptably.

The coefficients are preferrably stored in a look-up table for fast retrieval for all possible values of f and g.

Thus, the present invention solves the problem with the prior art, because the 3x3 filters and the 4x4 filters do not have the low-pass characteristics of the 2x2 filter. It is also possible with the present invention to move a pixel an arbitrary subpixel distance. The invention is only limited by the claims below.

**Claims**

1. A method of moving a pixel a subpixel distance including

   two-dimensional interpolation of a pixel value spaced a fractional pixel distance from a pixel raster grid point of a previous picture, wherein
   the value q of an interpolated pixel q(n,k) having integer coordinates [n,k] on the raster grid of a new picture is calculated using

   a known motion vector [x+f,y+g] with respect to a previous picture, [x,y] being integer components and [f, g] being fractional components of the motion vector, respectively, in terms of interpixel distance,
   plural pixel values p(i,j) of pixels located at, and in the vicinity of, that pixel p(0,0) in the previous picture which corresponds most closely to the interpolated pixel,
   at least 3x3 of said plural pixel values being used from the previous picture, the interpolated pixel value being calculated as a weighted sum of previous pixel values, where the weighting coefficients depend on the motion vector, the method being characterized in that the value of the pixel is calculated as

$$q(n, k) = \sum_{i=-1}^{1} \sum_{j=-1}^{1} a_i r_j p(n+x+i, k+y+j)$$

   where the fractional components of the motion vector meet the conditions $-1/2 < f \leq 1/2$ and $-1/2 < g \leq 1/2$, $p(n+x+i, k+y+j)$ represents pixel values in the previous picture, and the coefficients $a_i$ and $r_j$ represent two separate sets of weighting coefficients, the coefficients in the first one of said sets being determined by a polynomial function of third or higher order of solely the first component f of the fractional part of the motion vector, the coefficients in the second one of said sets being determined by a polynomial function of third or higher order of solely the second component g of the fractional part of the motion vector.

2. A method according to claim 1, **characterized in** that the coefficients are calculated as

$$a_{-1} = \frac{-2f + 3f2^2 - |f^3|}{4}$$

$$a_o = \frac{2 - 3f^2 + |f^3|}{2}$$

$$a_1 = \frac{2f + 3f^2 - |f^3|}{4}$$

$$r_{-1} = \frac{-2g + 3g^2 - |g^3|}{4}$$

$$r_o = \frac{2 - 3g^2 + |g^3|}{2}$$

$$r_1 = \frac{2g + 3g^2 - |g^3|}{4}$$

3. A method of moving a pixel a subpixel distance including

two-dimensional interpolation of a pixel value spaced a fractional pixel distance from a pixel raster grid point of a previous picture, wherein
the value q of an interpolated pixel q(n,k) having integer coordinates [n,k] on the raster grid of a new picture is calculated using

a known motion vector [x+f,y+g] with respect to a previous picture, [x,y] being integer components and [f, g] being fractional components of the motion vector, respectively, in terms of interpixel distance,
plural pixel values p(i,j) of pixels located at, and in the vicinity of, that pixel p(0,0) in the previous picture which corresponds most closely to the interpolated pixel,
at least 4x4 of said plural pixel values being used from the previous picture, the interpolated pixel value being calculated as a weighted sum of previous pixel values, where the weighting coefficients depend on the motion vector,

the method being **characterized in** that the pixel value is calculated as

$$q(n,k) = \sum_{i=-1}^{2} \sum_{j=-1}^{2} a_i r_j p(n+x+i, k+y+j)$$

where the fractional components of the motion vector meet the conditions

$0 \leq f \leq 1$ and $0 \leq g \leq 1$,
p(n+x+i, k+y+j) represents pixel values in the previous picture and the coefficients $a_i$ and $r_j$ represent two separate sets of weighting coefficients, the coefficients in the first one of said sets being determined by a polynomial function of third or higher order of solely the first component f of the fractional part of the motion vector, the coefficients in the second one of said sets being determined by a polynomial function of third or higher order of solely the second component g of the fractional part of the motion vector.

4. A method according to claim 3, **characterized in** that the coefficients are calculated as

$$a_{-1} = \frac{-7f + 12f^2 - 5f^3}{15}$$

$$a_o = \frac{15 - 3f - 27f^2 + 15f^3}{15}$$

$$a_1 = \frac{12f + 18f^2 - 15f^3}{15}$$

$$a_2 = \frac{-2f - 3f^2 + 5f^3}{15}$$

$$r_{-1} = \frac{-7g + 12g^2 - 5g^3}{15}$$

$$r_o = \frac{15 - 3g - 27g^2 + 15g^3}{15}$$

$$r_1 = \frac{12g + 18g^2 - 15g^3}{15}$$

$$r_2 = \frac{-2g - 3g^2 + 5g^3}{15}$$

**Patentansprüche**

1.  Verfahren zum Bewegen eines Pixels um eine Unterpixel-Entfernung, das einschließt

    zweidimensionale Interpolation eines Pixelwertes, der eine Bruchteils-Pixel-Entfernung von einem Pixelrastergitterpunkt eines vorhergehenden Bildes entfernt ist, wobei

    der Wert q eines interpolierten Pixels q(n,k) mit ganzzahligen Koordinaten [n,k] auf dem Rastergitter eines neuen Bildes berechnet wird unter Verwendung

    eines bekannten Bewegungsvektors [x+f, y+g] in bezug auf ein vorhergehendes Bild, wobei [x,y] ganzzahlige Komponenten und [f,g] Bruchtteilskomponenten des Bewegungsvektors, ausgedrückt durch die Entfernung zwischen Pixeln, sind,

    und von mehreren Pixelwerten p(i,j) von Pixeln, die bei dem Pixel und in der Nähe des Pixels p(0,0) im vorhergehenden Bild angeordnet sind, der am nächsten dem interpolierten Pixel entspricht,

    wobei wenigstens 3x3 von den mehreren Pixelwerten aus dem vorhergehenden Bild verwendet werden, wobei die interpolierten Pixelwerte als eine gewichtete Summe von vorhergehenden Pixelwerten berechnet werden, wobei die Gewichtungskoeffizienten vom Bewegungsvektor abhängen, welches Verfahren dadurch gekennzeichnet ist, daß der Wert des Pixels berechnet wird als

    $$q(n,k) = \sum_{i=-1}^{1} \sum_{j=-1}^{1} a_i r_j p(n+x+i,k+y+j)$$

    wobei die Bruchteilskomponenten des Bewegungsvektors den Bedingungen $-1/2 < f \le 1/2$ und $-1/2 < g \le 1/2$ genügen, p(n+x+i,k+y+j) Pixelwerte im vorhergehenden Bild repräsentiert und die Koeffizienten $a_i$ und $r_j$ zwei separate Sätze von Gewichtungskoeffizienten darstellen, wobei die Koeffizienten im ersten der Sätze durch eine Polynomfunktion dritter oder höherer Ordnung nur der ersten Komponente f des Bruchteilsanteils des Bewegungsvektors bestimmt werden, die Koeffizienten des zweiten der Sätze durch eine Polynomfunktion dritter oder höherer Ordnung nur der zweiten Komponente g des Bruchteilsanteils des Bewegungsvektors bestimmt werden.

2.  Verfahren nach Anspruch 1 dadurch gekennzeichnet, daß die Koeffizienten berechnet werden als:

    $$a_{-1} = \frac{-2f + 3f^2 - |f^3|}{4}$$

    $$a_o = \frac{2 - 3f^2 + |f^3|}{2}$$

    $$a_1 = \frac{2f + 3f^2 - |f^3|}{4}$$

$$r_{-1} = \frac{-2g + 3g^2 - |g^3|}{4}$$

$$r_{0} = \frac{2 - 3g^2 + |g^3|}{2}$$

$$r_{1} = \frac{2g + 3g^2 - |g^3|}{4}$$

3.  Verfahren zum Bewegen eines Pixels um eine Unterpixel-Entfernung, das einschließt

    zweidimensionale Interpolation eines Pixelwertes, der eine Bruchteils-Pixel-Entfernung von einem Pixelgitterpunkt eines vorhergehenden Bildes entfernt ist, wobei

    der Wert q eines interpolierten Pixels q(n,k), der ganzzahlige Koordinaten [n,k] auf dem Rastergitter hat, eines neuen Bildes berechnet wird unter Verwendung

    eines bekannten Bewegungsvektors [x+f,y+g] in bezug auf ein vorhergehendes Bild, wobei [x,y] ganzzahlige Komponenten und [f,g] Bruchteilskomponenten des Bewegungsvektors ausgedrückt in Einheiten der Entfernung zwischen Pixeln sind,

    und von mehreren Pixelwerten p(i,j) von Pixeln, die bei dem Pixel und in der Nähe des Pixels p(0,0) im vorhergehenden Bild angeordnet sind, der am nächsten dem interpolierten Pixel entspricht,

    wobei wenigstens 4x4 der mehreren Pixelwerte aus dem vorhergehenden Bild verwendet werden, wobei der interpolierte Pixelwert als eine gewichtete Summe von vorhergehenden Pixelwerten berechnet wird, wobei die Gewichtungskoeffizienten vom Bewegungsvektor abhängen,

    welches Verfahren dadurch gekennzeichnet ist, daß der Pixelwert berechnet wird als

$$q(n,k) = \sum_{i=-1}^{2} \sum_{j=-1}^{2} a_i r_j p(n+x+i, k+y+j)$$

    wobei die Bruchteilskomponenten des Bewegungsvektors den Bedingungen $0 \leq f \leq 1$ und $0 \leq g < 1$ genügen, p(n+y+i,k+y+j) die Pixelwerte im vorherigen Bild darstellen und die Koeffizienten $a_i$ und rj zwei separate Sätze von Gewichtungskoeffizienten darstellen, wobei die Koeffizienten im ersten der Sätze bestimmt sind durch eine Polymonfunktion dritter oder höherer Ordnung nur der ersten Komponente f des Bruchteilsanteils des Bewegungsvektors, wobei die Koeffizienten des zweiten der Sätze durch eine Polynomfunktion dritter oder höherer Ordnung nur der zweiten Komponente g des Bruchteilsanteils des Bewegungsvektors bestimmt werden.

4.  Verfahren nach Anspruch 3, dadurch gekennzeichnet, daß die Koeffizienten berechnet werden als:

$$a_{-1} = \frac{-7f + 12f^2 - 5f^3}{15}$$

$$a_{0} = \frac{15 - 3f - 27f^2 + 15f^3}{15}$$

EP 0 543 917 B1

$$a_1 = \frac{12f + 18f^2 - 15f^3}{15}$$

$$a_2 = \frac{-2f - 3f^2 + 5f^3}{15}$$

$$r_{-1} = \frac{-7g + 12g^2 - 5g^3}{15}$$

$$r_0 = \frac{15 - 3g - 27g^2 + 15g^3}{15}$$

$$r_1 = \frac{12g + 18g^2 - 15g^3}{15}$$

$$r_2 = \frac{-2g - 3g^2 + 5g^3}{15}$$

**Revendications**

1. Procédé pour déplacer un pixel d'une distance inférieure au pixel, comprenant :

   l'interpolation bidimensionnelle d'une valeur de pixel espacée d'une distance correspondant à une fraction de pixel par rapport à un point de pixel d'une grille de trame d'une image précédente, dans laquelle la valeur q d'un pixel interpolé q(n,k) ayant des coordonnées entières [n,k] sur la grille de trame d'une nouvelle image est calculée par utilisation de :

   un vecteur de mouvement connu [x+f, y+g] par rapport à une image précédente, [x,y] étant les composants entiers et [f,g] étant les composants fractionnels du vecteur de mouvement, respectivement,en termes de distance entre pixels adjacents,
   plusieurs valeurs de pixel p(i,j) de pixels situés à l'endroit et au voisinage du pixel p(0,0) de l'image précédente qui correspond le plus étroitement au pixel interpolé,
   au moins 3x3 de ladite pluralité de valeurs de pixel étant utilisées à partir de l'image précédente, la valeur du pixel interpolé étant calculée comme une somme pondérée des valeurs de pixel précédentes, les coefficients de pondération dépendant du vecteur de mouvement,

   caractérisé en ce que la valeur du pixel est calculée comme étant

$$q(n, k) = \sum_{i=-1}^{1} \sum_{j=-1}^{1} a_i r_j p(n+x+i, k+y+j)$$

   où les composants fractionnels du vecteur de mouvement satisfont aux conditions $-1/2 < f \leq 1/2$ et $-1/2 < g \leq 1/2$, p(n+x+i, k+y+j) représente des valeurs de pixel dans l'image précédente, et les coefficients $a_i$ et $r_j$ représentent deux ensembles séparés de coefficients de pondération, les coefficients du premier desdits ensembles étant déterminés par une fonction polynomiale de troisième ordre, ou d'ordre supérieur, de seulement le premier composant f de la partie fractionnelle du vecteur de mouvement, les coefficients du deuxième desdits ensembles étant déterminés par une fonction polynomiale de troisième ordre, ou d'ordre supérieur,de seulement le deuxième composant g de la partie fractionnelle du vecteur de mouvement.

2. Procédé suivant la revendication 1, caractérisé en ce que les coefficients sont calculés comme étant

$$a_{-1} = \frac{-2f + 3f2^2 - |f^3|}{4}$$

$$a_o = \frac{2 - 3f^2 + |f^3|}{2}$$

$$a_1 = \frac{2f + 3f^2 - |f^3|}{4}$$

$$r_{-1} = \frac{-2g + 3g^2 - |g^3|}{4}$$

$$r_o = \frac{2 - 3g^2 + |g^3|}{2}$$

$$r_1 = \frac{2g + 3g^2 - |g^3|}{4}$$

3. Procédé pour déplacer un pixel d'une distance inférieure au pixel, comprenant :

l'interpolation bidimensionnelle d'une valeur de pixel espacée d'une distance correspondant à une fraction de pixel d'un point de pixel de grille de trame d'une image précédente, dans laquelle
la valeur q d'un pixel interpolé q(n,k) ayant des coordonnées entières [n,k] sur la grille de trame d'une nouvelle image est calculée par utilisation de :

un vecteur de mouvement connu [x+f,y+g] par rapport à une image précédente, [x,y] étant les composants entiers et [f,g] étant les composants fractionnels du vecteur de mouvement, respectivement, en termes de distance entre pixels adjacents, plusieurs valeurs de pixel p(i,j) de pixels situés à l'endroit et au voisinage du pixel p(0,0) de l'image précédente qui correspond le plus étroitement au pixel interpolé ,
au moins 4x4 de ladite pluralité de valeurs de pixel étant utilisées à partir de l'image précédente, la valeur du pixel interpolé étant calculée comme une somme pondérée des valeurs de pixel précédentes, et les coefficients de pondération dépendant du vecteur de mouvement,

caractérisé en ce que la valeur du pixel est calculée comme étant

$$q(n,k) = \sum_{i=-1}^{2} \sum_{j=-1}^{2} a_i r_j p(n+x+i, k+y+j)$$

où les composants fractionnels du vecteur de mouvement satisfont aux conditions $0 \leq f < 1$ et $0 \leq g < 1$, p(n+x+i, k+y+j) représente des valeurs de pixel dans l'image précédente, et les coefficients $a_i$ et $r_j$ représentent deux ensembles séparés de coefficientsde pondération, les coefficients du premier desdits ensembles étant déterminés par une fonction polynomiale du troisième ordre, ou d'ordre supérieur, de seulement le premier composant f de la partie fractionnelle du vecteur de mouvement, les coefficients du deuxième desdits ensembles étant déterminés par une fonction polynomiale du troisième ordre, ou d'ordre supérieur,de seulement le deuxième composant g de la partie fractionnelle du vecteur de mouvement.

4. Procédé suivant la revendication 3, caractérisé en ce que les coefficients sont calculés comme étant

$$a_{-1} = \frac{-7f + 12f^2 - 5f^3}{15}$$

$$a_o = \frac{15 - 3f - 27f^2 + 15f^3}{15}$$

$$a_1 = \frac{12f + 18f^2 - 15f^3}{15}$$

$$a_2 = \frac{-2f - 3f^2 + 5f^3}{15}$$

$$r_{-1} = \frac{-7g + 12g^2 - 5g^3}{15}$$

$$r_o = \frac{15 - 3g - 27g^2 + 15g^3}{15}$$

$$r_1 = \frac{12g + 18g^2 - 15g^3}{15}$$

$$r_2 = \frac{-2g - 3g^2 + 5g^3}{15}$$

(i, j)　　(-1, -1)　　(0, -1)　　(1, -1)

(-1, 0)　　　　　　　↱→ f　·

g

(-1, 1)　　　　　·　　　·

## FIG. 1

(i, j)　(-1, -1)　(0, -1)　(1, -1)　(2, -1)

(1, 0)　　　　　↱→ f　·　　　·

g

(-1, 1)　　　　·　　　·　　·

(-1, 2)　　　　·　　·　　·

## FIG. 2